(19) Europäisches Patentamt
European Patent Office
Office européen des brevets

(11) **EP 2 630 072 B1**

(12) **EUROPÄISCHE PATENTSCHRIFT**

(45) Veröffentlichungstag und Bekanntmachung des Hinweises auf die Patenterteilung:
**18.03.2015   Patentblatt 2015/12**

(21) Anmeldenummer: **11805814.8**

(22) Anmeldetag: **15.12.2011**

(51) Int Cl.:
**B66B 13/08** *(2006.01)*    **B66B 13/14** *(2006.01)*
**B66B 13/26** *(2006.01)*

(86) Internationale Anmeldenummer:
**PCT/EP2011/072888**

(87) Internationale Veröffentlichungsnummer:
**WO 2012/089522 (05.07.2012 Gazette 2012/27)**

(54) **VERFAHREN UND VORRICHTUNG ZUR ERMITTLUNG EINER KRAFT SOWIE VERWENDUNG DES VERFAHRENS UND/ODER DER VORRICHTUNG**

METHOD AND APPARATUS FOR DETERMINING A FORCE, AND USE OF THE METHOD AND/OR OF THE APPARATUS

PROCÉDÉ ET DISPOSITIF DE DÉTERMINATION D'UNE FORCE ET UTILISATION DUDIT PROCÉDÉ ET/OU DUDIT DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.12.2010   DE 102010064217**

(43) Veröffentlichungstag der Anmeldung:
**28.08.2013   Patentblatt 2013/35**

(73) Patentinhaber: **Siemens Aktiengesellschaft**
**80333 München (DE)**

(72) Erfinder:
• **NOLTE, Uwe**
  **30890 Barsinghausen (DE)**
• **KRAUSE, Uwe**
  **30982 Pattensen (DE)**
• **SONNTAG, Guido**
  **30989 Gehrden (DE)**

(56) Entgegenhaltungen:
EP-A2- 0 923 012    JP-A- 9 290 986
US-A- 2 572 196    US-A- 5 131 506
US-A- 5 267 478    US-A1- 2010 126 073

**Beschreibung**

Die Erfindung betrifft ein Verfahren zur Ermittlung einer Kraft gemäß dem Oberbegriff des Anspruchs 1, eine Vorrichtung zur Durchführung des Verfahrens gemäß dem Oberbegriff des Anspruchs 5 und eine Verwendung des Verfahrens und/oder der Vorrichtung gemäß dem Oberbegriff des Anspruchs 6 oder 7.

Aus dem Stand der Technik ist es bekannt, eine Kabinentür eines Aufzuges mit einem Antriebszahnrad einer Motorwelle eines Elektromotors zu koppeln, so dass mittels des Elektromotors die Kabinentür zu öffnen und zu schließen ist. Der Elektromotor ist mit einem Leistungsverstärker elektrisch gekoppelt, welcher über einen Verbindungsstromkreis mit einer Energieversorgungseinheit in Form eines Netzteils gekoppelt ist.

Es sind verschiedene Methoden zur Ermittlung der vom Elektromotor auf die Kabinentür wirkenden Kraft bekannt, beispielsweise die Messung des Motorstroms und die Bestimmung der Kraft mittels der Motorkonstante und der Gesetze der mechanischen Kraftübertragung. Des Weiteren sind auch Kraftmesseinrichtungen möglich. Zudem ist bei bekannter Türmasse die Kraft auch durch eine Bestimmung der Türbeschleunigung ermittelbar.

Zur Begrenzung der maximal möglichen auf die Kabinentür wirkenden Kraft, um beispielsweise eine Verletzung von Personen im Falle eines Einklemmens zu verhindern, werden mechanische Einrichtungen verwendet, welche nur eine vorgegebene maximale Kraftübertragung ermöglichen, zum Beispiel eine Rutschkupplung.

Des Weiteren ist eine Begrenzung der Kraft durch eine Begrenzung der Motorspannung mit einer Kompensation der gegenelektromotorischen Kraft möglich.

JP 2000128465 A offenbart eine Steuerung einer Aufzugstür, bei dem eine auf die Tür wirkende Antriebskraft ermittelt wird.

Der Erfindung liegt die Aufgabe zugrunde, ein verbessertes Verfahren zur Ermittlung einer Kraft, eine Vorrichtung zur Durchführung des Verfahrens und eine Verwendung des Verfahrens und/oder der Vorrichtung anzugeben.

Die Aufgabe wird erfindungsgemäß durch ein Verfahren zur Ermittlung einer Kraft mit den Merkmalen des Anspruchs 1, eine Vorrichtung zur Durchführung des Verfahrens mit den Merkmalen des Anspruchs 8 und eine Verwendung des Verfahrens und/oder der Vorrichtung mit den Merkmalen des Anspruchs 10 oder 11 gelöst.

Vorteilhafte Ausgestaltungen der Erfindung sind Gegenstand der Unteransprüche.

In einem erfindungsgemäßen Verfahren zur Ermittlung einer Kraft, die über ein Antriebsrad, das an einer Motorwelle eines Elektromotors befestigt ist, auf ein Bauteil einwirkt, welches mit dem Antriebsrad direkt formschlüssig und/oder kraftschlüssig gekoppelt ist, wobei der Elektromotor mit einem Leistungsverstärker elektrisch gekoppelt ist, welcher über einen Verbindungsstromkreis mit einer Energieversorgungseinheit gekoppelt ist, wird die Kraft mittels einer Spannung und eines Stroms ermittelt, die im Verbindungsstromkreis ermittelt werden. Bei einem Getriebemotor ist das Antriebsrad alternativ an einer Abtriebswelle befestigt.

Das Bauteil ist beispielsweise eine Kabinentür einer Aufzugkabine und weist zum Beispiel eine Zahnstange auf, über welche die Kabinentür mit dem beispielsweise als Zahnrad ausgebildeten Antriebsrad des Elektromotors direkt formschlüssig gekoppelt ist. Alternativ kann das Antriebsrad beispielsweise als Reibrad ausgebildet sein und mit dem beispielsweise als Kabinentür ausgebildeten Bauteil direkt kraftschlüssig gekoppelt sein.

In einer weiteren möglichen Alternative kann die Kabinentür beispielsweise auch über einen Zahnriemen mit dem Antriebsrad des Elektromotors gekoppelt sein, wobei dann schon der Zahnriemen das Bauteil ist, auf welches die zu ermittelnde Kraft vom Antriebsrad des Elektromotors übertragen wird. Bei einem Übersetzungsverhältnis von 1:1 in der Kopplung zwischen dem Antriebsrad und der Kabinentür, d.h. zwischen dem Antriebsrad und möglichen weiteren in der Kopplung vorhandenen Rädern, ist jedoch die an der Kabinentür angreifende Kraft bei Vernachlässigung von Reibungsverlusten identisch mit der vom Antriebsrad auf den Zahnriemen übertragenen Kraft.

Zum Bewegen derartiger Kabinentüren darf eine vorgegebene Maximalkraft nicht überschritten werden, um beispielsweise bei einem Einklemmen von Personen oder Gegenständen eine Verletzung der Personen bzw. eine Beschädigung der Gegenstände zu vermeiden. Wird eine Fehlfunktion, d.h. ein nicht vollständiges Öffnen oder Schließen der Kabinentür aufgrund eines Blockierens zum Beispiel durch eingeklemmte Personen oder Gegenstände festgestellt, so ist der Elektromotor abzuschalten. Des Weiteren ist der Elektromotor bei einer ermittelten zu hohen Kraft abzuschalten, da dies bei einem Kontakt mit der Kabinentür zu Verletzungen von Personen oder zur Beschädigung von Gegenständen führen könnte.

Mittels des Verfahrens kann auf einfache und kostengünstige Weise die Kraft ermittelt werden, welche durch den Elektromotor bei stehender Kabinentür, beispielsweise bei blockierter Kabinentür, oder bei bewegter Kabinentür auf die Kabinentür übertragen wird und durch diese beispielsweise auf Personen oder Gegenstände einwirkt, wenn eine Vorderkante der Kabinentür auf diese auftreffen sollte und/oder wenn die Personen oder Gegenstände durch die Kabinentür eingeklemmt werden.

Dabei werden die Spannung und der Strom im Verbindungsstromkreis ermittelt, über welchen die Energieversorgungseinheit, beispielsweise ein Netzteil, mit dem Leistungsverstärker, insbesondere mit einer Endstufe, auch Motorendstufe genannt, gekoppelt ist, d.h. in einem Zwischenstromkreis. Daher ist zur Spannungs- und Stromermittlung kein Eingriff in den Leistungsverstärker oder den Elektromotor oder in die elektrische Kopplung des Leistungsverstärkers mit dem Elektromotor erforderlich. Des Weiteren ist die Ermittlung der Spannung und des Stroms mit entsprechenden Sensoren kostengünstig durchführbar, da potenzialbezogen gemessen werden kann. Auf diese Weise können eine Vielzahl unterschiedlicher Leistungsverstärker und Elektromotoren verwendet werden, wobei das Verfahren jeweils problemlos durchgeführt werden kann.

Bei der Ermittlung der Kraft werden Reibungsverluste und ein Wirkungsgrad des Elektromotors vernachlässigt. Daher ist eine reale Kraft stets geringer als die ermittelte Kraft, da stets ein Minimum an Reibung vorhanden ist. Auf diese Weise ist stets ein Sicherheitsspielraum gegeben, so dass eine Überschreitung der vorgegebenen zulässigen Maximalkraft verhindert ist.

Zweckmäßigerweise werden die Spannung und der Strom im Verbindungsstromkreis als Mittelwerte über einen vorgegebenen Zeitraum ermittelt. Ein derartiger Zeitraum beträgt beispielsweise zehn Millisekunden. Dies ist sinnvoll aufgrund von Energiespeichern in der durch die Energieversorgungseinheit, den Leistungsverstärker, den Elektromotor und das mit diesem gekoppelte Bauteil gebildeten Anordnung. Dadurch können kurzzeitige Kraftspitzen verursacht oder ausgeglichen werden, die nicht bei der Energieaufnahme erkennbar sind. Durch die Ermittlung der Spannung und des Stroms als Mittelwerte über den vorgegebenen Zeitraum werden Fehlalarme aufgrund falsch ermittelter Kräfte, beispielsweise aufgrund einer kurzzeitigen Kraftspitze, und eine daraus beispielsweise resultierende Fehlabschaltung des Elektromotors vermieden.

Derartige Fehlalarme hätten bei einem Aufzug möglicherweise eine lange Ausfallzeit des Aufzugs und einen hohen Wartungsaufwand mit entsprechend hohen Wartungskosten zur Folge. Der vorgegebene Zeitraum sollte entsprechend der jeweiligen Anwendung ausreichend kurz vorgegeben werden. Bei der Kabinentür sollte der Zeitraum beispielsweise so kurz vorgegeben werden, dass eventuell eingeklemmte Personen nicht verletzt und eingeklemmte Gegenstände nicht beschädigt werden. Bei einem vorgegebenen Zeitraum von beispielsweise zehn Millisekunden ist dies gegeben, da eine so kurze Krafteinwirkung kaum spürbar wäre.

Vorzugsweise wird in einem unbewegten Zustand des Bauteils die Kraft mittels der im Verbindungsstromkreis ermittelten Spannung, mittels des im Verbindungsstromkreis ermittelten Stroms, mittels einer Motorkonstante, mittels eines Widerstandes des Elektromotors, auch Wicklungswiderstand oder Innenwiderstand genannt, und mittels eines Radius des Antriebsrades ermittelt. Auf diese Weise kann im unbewegten Zustand des Bauteils, d.h. beispielsweise bei stehender Kabinentür, die Kraft ermittelt werden, welche vom Antriebsrad auf das Bauteil übertragen wird und bei möglicherweise eingeklemmten Personen oder Gegenständen über die Kabinentür auf diese einwirkt.

Neben dem ermittelten Strom und der ermittelten Spannung müssen zur Durchführung des Verfahrens lediglich die Motorkonstante und der Widerstand des jeweiligen Elektromotors sowie der Radius des jeweils verwendeten Antriebsrades bekannt sein. Die Motorkonstante und der Widerstand des Elektromotors sind beispielsweise einem Datenblatt des Elektromotors entnehmbar, der Radius des Antriebsrades ist beispielsweise ebenfalls einem entsprechenden Datenblatt entnehmbar oder messbar.

Die Kraft kann nach folgender Formel ermittelt werden:

$$F = \frac{K * \sqrt{\dfrac{U * I}{R}}}{r} \qquad [1]$$

Dabei ist F die Kraft, K die Motorkonstante, U die ermittelte Spannung im Verbindungsstromkreis, I der ermittelte Strom im Verbindungsstromkreis, R der Widerstand des Elektromotors und r der Radius des Antriebsrades.

In einer vorteilhaften Ausführungsform wird in einem bewegten Zustand des Bauteils die Kraft mittels der im Verbindungsstromkreis ermittelten Spannung, mittels des im Verbindungsstromkreis ermittelten Stroms und mittels einer Geschwindigkeit des Bauteils ermittelt. Auf diese Weise kann im bewegten Zustand des Bauteils, d.h. beispielsweise bei bewegter Kabinentür, die Kraft ermittelt werden, welche vom Antriebsrad auf das Bauteil übertragen wird und bei Kontakt der Kabinentür mit Personen oder Gegenständen über die Kabinentür auf diese einwirkt.

Neben dem ermittelten Strom und der ermittelten Spannung ist in dieser Ausführungsform des Verfahrens zusätzlich noch die Geschwindigkeit des Bauteils, d.h. beispielsweise der Kabinentür zu ermitteln. Dies kann über einen entsprechenden Sensor, beispielsweise einen Inkrementalgeber erfolgen.

Die Kraft kann nach folgender Formel ermittelt werden:

$$F = \frac{U * I}{v} \qquad [2]$$

Dabei ist F die Kraft, U die ermittelte Spannung im Verbindungsstromkreis, I der ermittelte Strom im Verbindungsstromkreis und v die Geschwindigkeit des Bauteils.

Zweckmäßigerweise wird neben der Spannung und dem Strom auch die Geschwindigkeit des Bauteils als Mittelwert über einen vorgegebenen Zeitraum ermittelt. Ein derartiger Zeitraum beträgt beispielsweise zehn Millisekunden. Da alle zu ermittelnden Größen als Mittelwerte über den vorgegebenen Zeitraum ermittelt werden, werden Fehlalarme aufgrund falsch ermittelter Kräfte, beispielsweise aufgrund einer kurzzeitigen Kraftspitze, und eine daraus beispielsweise resultierende Fehlabschaltung des Elektromotors vermieden.

Derartige Fehlalarme hätten bei einem Aufzug möglicherweise eine lange Ausfallzeit des Aufzugs und einen hohen Wartungsaufwand mit entsprechend hohen Wartungskosten zur Folge. Der vorgegebene Zeitraum sollte entsprechend der jeweiligen Anwendung ausreichend kurz vorgegeben werden. Bei der Kabinentür sollte der Zeitraum beispielsweise so kurz vorgegeben werden, dass eventuell eingeklemmte Personen nicht verletzt und eingeklemmte Gegenstände nicht beschädigt werden. Bei einem vorgegebenen Zeitraum von beispielsweise zehn Millisekunden ist dies gegeben, da eine so kurze Krafteinwirkung kaum spürbar wäre.

In einer weiteren vorteilhaften Ausführungsform wird in einem bewegten Zustand des Bauteils die Kraft mittels der im Verbindungsstromkreis ermittelten Spannung, mittels des im Verbindungsstromkreis ermittelten Stroms, mittels einer Winkelgeschwindigkeit der Motorwelle und mittels eines Radius des Antriebsrades ermittelt. Auch auf diese Weise kann im bewegten Zustand des Bauteils, d.h. beispielsweise bei bewegter Kabinentür, die Kraft ermittelt werden, welche vom Antriebsrad auf das Bauteil übertragen wird und bei Kontakt der Kabinentür mit Personen oder Gegenständen über die Kabinentür auf diese einwirkt.

Neben dem ermittelten Strom und der ermittelten Spannung ist in dieser Ausführungsform des Verfahrens zusätzlich noch die Winkelgeschwindigkeit der Motorwelle eines Elektromotors oder einer Abtriebswelle, wenn es sich z.B. um einen Getriebemotor handelt, zu ermitteln. Dies kann über einen entsprechenden Sensor, beispielsweise einen Inkrementalgeber erfolgen. Des Weiteren muss der Radius des jeweils verwendeten Antriebsrades bekannt sein. Dieser ist beispielsweise ebenfalls einem entsprechenden Datenblatt entnehmbar oder messbar.

Die Kraft kann nach folgender Formel ermittelt werden:

$$F = \frac{U*I}{\omega*r} \qquad\qquad [3]$$

Dabei ist F die Kraft, U die ermittelte Spannung im Verbindungsstromkreis, I der ermittelte Strom im Verbindungsstromkreis, ω die Winkelgeschwindigkeit der Motorwelle oder Abtriebswelle und r der Radius des Antriebsrades.

Zweckmäßigerweise wird neben der Spannung und dem Strom auch die Winkelgeschwindigkeit der Motorwelle als Mittelwert über einen vorgegebenen Zeitraum ermittelt. Ein derartiger Zeitraum beträgt beispielsweise zehn Millisekunden. Da alle zu ermittelnden Größen als Mittelwerte über den vorgegebenen Zeitraum ermittelt werden, werden Fehlalarme aufgrund falsch ermittelter Kräfte, beispielsweise aufgrund einer kurzzeitigen Kraftspitze, und eine daraus beispielsweise resultierende Fehlabschaltung des Elektromotors vermieden.

Derartige Fehlalarme hätten bei einem Aufzug möglicherweise eine lange Ausfallzeit des Aufzugs und einen hohen Wartungsaufwand mit entsprechend hohen Wartungskosten zur Folge. Der vorgegebene Zeitraum sollte entsprechend der jeweiligen Anwendung ausreichend kurz vorgegeben werden. Bei der Kabinentür sollte der Zeitraum beispielsweise so kurz vorgegeben werden, dass eventuell eingeklemmte Personen nicht verletzt und eingeklemmte Gegenstände nicht beschädigt werden. Bei einem vorgegebenen Zeitraum von beispielsweise zehn Millisekunden ist dies gegeben, da eine so kurze Krafteinwirkung kaum spürbar wäre.

Eine erfindungsgemäße Vorrichtung zur Durchführung des Verfahrens zur Ermittlung einer Kraft, die über ein Antriebsrad, das an einer Motorwelle oder Abtriebswelle eines Elektromotors befestigt ist, auf ein Bauteil einwirkt, welches mit dem Antriebsrad direkt formschlüssig und/oder kraftschlüssig gekoppelt ist, wobei der Elektromotor mit einem Leistungsverstärker elektrisch gekoppelt ist, welcher über einen Verbindungsstromkreis mit einer Energieversorgungseinheit gekoppelt ist, umfasst eine Auswerteeinheit und zumindest einen mit der Auswerteeinheit gekoppelten und im Verbindungsstromkreis angeordneten ersten Sensor zur Ermittlung einer Spannung und eines Stroms im Verbindungsstromkreis.

Wie bereits in den Ausführungen zum Verfahren erwähnt, ist das Bauteil beispielsweise eine Kabinentür einer Aufzugkabine und weist zum Beispiel eine Zahnstange auf, über welche die Kabinentür mit dem beispielsweise als Zahnrad ausgebildeten Antriebsrad des Elektromotors direkt formschlüssig gekoppelt ist. Alternativ kann das Antriebsrad beispielsweise als Reibrad ausgebildet sein und mit dem beispielsweise als Kabinentür ausgebildeten Bauteil direkt kraftschlüssig gekoppelt sein.

In einer weiteren möglichen Alternative kann die Kabinentür beispielsweise auch über einen Zahnriemen mit dem Antriebsrad des Elektromotors gekoppelt sein, wobei dann schon der Zahnriemen das Bauteil ist, auf welches die zu ermittelnde Kraft vom Antriebsrad des Elektromotors übertragen wird. Bei einem Übersetzungsverhältnis von 1:1 in der Kopplung zwischen dem Antriebsrad und der Kabinentür, d.h. zwischen dem Antriebsrad und möglichen weiteren in der Kopplung vorhandenen Rädern, ist jedoch die an der Kabinentür angreifende Kraft bei Vernachlässigung von Reibungsverlusten identisch mit der vom Antriebsrad auf den Zahnriemen übertragenen Kraft.

Zum Bewegen derartiger Kabinentüren ist eine vorgegebene Maximalkraft nicht zu überschreiten, um beispielsweise bei einem Einklemmen von Personen oder Gegenständen eine Verletzung der Personen bzw. eine Beschädigung der Gegenstände zu vermeiden. Bei einer Fehlfunktion, d.h. beispielsweise bei einem nicht vollständiges Öffnen oder Schließen der Kabinentür aufgrund eines Blockierens zum Beispiel durch eingeklemmte Personen oder Gegenstände oder aufgrund einer Kraftüberschreitung während des Bewegens der Kabinentür ist der Elektromotor abzuschalten.

Mittels der Vorrichtung ist auf einfache und kostengünstige Weise die Kraft ermittelbar, die der Elektromotor auf die Kabinentür überträgt und welche bei einem Kontakt der Kabinentür mit Personen oder Gegenständen auf diese einwirkt. Die Ermittlung der Spannung und des Stroms erfolgt im Verbindungsstromkreis, über welchen die Energieversorgungseinheit, beispielsweise ein Netzteil, mit dem Leistungsverstärker, auch Endstufe oder Motorendstufe genannt, gekoppelt ist, d.h. in einem Zwischenstromkreis. Daher ist zur Spannungs- und Stromermittlung kein Eingriff in den Leistungsverstärker oder den Elektromotor oder in die elektrische Kopplung des Leistungsverstärkers mit dem Elektromotor erforderlich. Auf diese Weise sind eine Vielzahl unterschiedlicher Leistungsverstärker und Elektromotoren verwendbar. Des Weiteren ist die Ermittlung der Spannung und des Stroms mit entsprechenden ersten Sensoren kostengünstig durchführbar, da die Messung potenzialbezogen durchführbar ist.

Zweckmäßigerweise umfasst die Vorrichtung zumindest einen mit der Auswerteeinheit gekoppelten zweiten Sensor zur Ermittlung einer Geschwindigkeit des Bauteils und/oder einer Winkelgeschwindigkeit der Motorwelle oder Abtriebswelle. Auf diese Weise ist das Verfahren insbesondere in seiner oben beschriebenen zweiten und dritten Ausführungsform auch bei bewegter Kabinentür durchführbar. Der zweite Sensor ist beispielsweise ein Inkrementalgeber.

In einer erfindungsgemäßen Verwendung des Verfahrens und/oder der Vorrichtung wird eine Fehlfunktion erkannt, wenn die ermittelte Kraft einen vorgegebenen Wert überschreitet. Der Wert wird zweckmäßigerweise durch die Maximalkraft vorgegeben.

In einer weiteren erfindungsgemäßen Verwendung des Verfahrens und/oder der Vorrichtung wird die Kraft in einer vorgegebenen Anzahl von Ermittlungszyklen ermittelt und es wird eine Fehlfunktion erkannt, wenn in einem vorgegebenen Anteil der Ermittlungszyklen die ermittelte Kraft einen vorgegebenen Wert überschreitet. Auch hier wird der Wert zweckmäßigerweise durch die Maximalkraft vorgegeben. Beispielsweise wird die Kraft in drei Ermittlungszyklen ermittelt, so dass drei ermittelte Werte für die Kraft vorliegen. Es wird dann beispielsweise eine Fehlfunktion erkannt, wenn mindestens zwei der drei ermittelten Werte für die Kraft den vorgegebenen Wert, beispielsweise die vorgegebene Maximalkraft überschreiten.

Auf diese Weise werden Fehlalarme, d.h. Falscherkennungen einer Fehlfunktion aufgrund kurzzeitiger, im realen Einsatz unbedeutender Kraftüberschreitungen oder beispielsweise aufgrund von Messfehlern und eine daraus beispielsweise resultierende Fehlabschaltung des Elektromotors vermieden. Derartige Fehlalarme hätten bei einem Aufzug möglicherweise eine lange Ausfallzeit des Aufzugs und einen hohen Wartungsaufwand mit entsprechend hohen Wartungskosten zur Folge.

Zweckmäßigerweise wird der Elektromotor bei einer erkannten Fehlfunktion abgeschaltet. Dadurch wird bei einer erkannten Fehlfunktion das Bauteil, beispielsweise die Kabinentür der Aufzugkabine, nicht mehr bewegt, wodurch Gefährdungen von Personen oder Gegenständen, welche von dem Bauteil, d.h. von der Kabinentür, mit einer unzulässig hohen Kraft getroffen und eingeklemmt und dadurch verletzt bzw. beschädigt werden könnten, vermieden werden.

Bei einem Aufzug wird daraus resultierend zweckmäßigerweise der gesamte Aufzug außer Betrieb gesetzt, um eine Gefährdung von Personen durch eine Bewegung der Aufzugkabine mit nicht verschlossener Kabinentür und des Weiteren durch nicht verschlossene Aufzugschachttüren, welche üblicherweise durch eine Kopplung mit der Kabinentür bewegt werden, zu vermeiden. Zudem wird bevorzugt eine Fehlermeldung generiert und beispielsweise an einen Wartungsdienst weitergeleitet, so dass eine schnelle Reparatur ermöglicht wird. Des Weiteren können aufgrund einer derartigen Fehlermeldung sich eventuell noch in der Aufzugkabine befindende Personen durch den Wartungsdienst unverzüglich befreit werden.

Ausführungsbeispiele der Erfindung werden im Folgenden anhand einer Zeichnung näher erläutert.

Dabei zeigt:

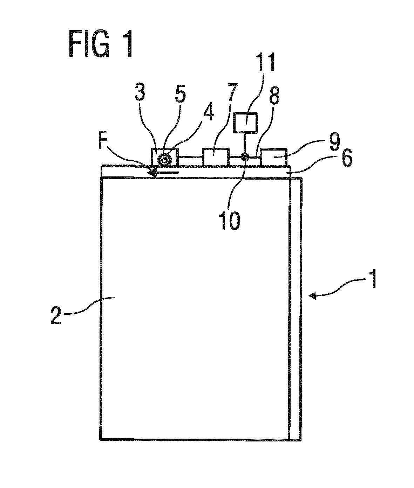

FIG 1    eine schematische Darstellung einer Aufzugkabine, welche eine mit einem Elektromotor gekoppelte Kabinentür aufweist.

Figur 1 zeigt eine schematische Darstellung einer Aufzugkabine 1, welche in einem hier nicht dargestellten Aufzugschacht angeordnet ist. Die Aufzugkabine 1 weist als ein Bauteil 2, welches bei einer Normalfunktion beweglich ist, eine Kabinentür auf.

Das Bauteil 2 ist mittels eines Elektromotors 3 bewegbar, welcher beispielsweise als Gleichstrommotor ausgebildet ist. An einer Motorwelle 4 des Elektromotors 3 ist ein Antriebsrad 5 befestigt, welches in diesem Ausführungsbeispiel als ein Zahnrad ausgebildet ist. Wenn es sich um einen Getriebemotor (Kombination von Elektromotor und Getriebe) handelt, ist das Antriebsrad an einer Abtriebswelle befestigt (nicht dargestellt).

Dieses Antriebsrad 5 ist mit dem Bauteil 2, d.h. mit der Kabinentür im hier dargestellten Beispiel direkt formschlüssig gekoppelt, da am Bauteil 2 eine Zahnstange 6 ausgebildet ist, wobei Zähne des Antriebsrades 5 in Zahnzwischenräume der Zahnstange 6 eingreifen und Zähne der Zahnstange 6 in Zahnzwischenräume des Antriebsrades 5 eingreifen, d.h. die Zahnstange 6 des Bauteils 2 und das Antriebsrad 5 sind miteinander verzahnt. In einem hier nicht dargestellten alternativen Ausführungsbeispiel kann das Antriebsrad 5 beispielsweise als ein Reibrad ausgebildet sein und in kraftschlüssiger Kopplung mit dem Bauteil 2 stehen.

Der Elektromotor 3 ist mit einem als Endstufe, insbesondere als Motorendstufe ausgebildeten Leistungsverstärker 7 elektrisch gekoppelt, welcher über einen Verbindungsstromkreis 8 mit einer als Netzteil ausgebildeten Energieversorgungseinheit 9 gekoppelt ist. Das Netzteil ist beispielsweise an ein Energieversorgungsnetz des Gebäudes angeschlossen.

Zum Bewegen derartiger Kabinentüren darf eine vorgegebene Maximalkraft nicht überschritten werden, um beispielsweise bei einem Einklemmen von Personen oder Gegenständen eine Verletzung der Personen bzw. eine Beschädigung der Gegenstände zu vermeiden. Wird eine Fehlfunktion, d.h. ein nicht vollständiges Öffnen oder Schließen der Kabinentür aufgrund eines Blockierens zum Beispiel durch eingeklemmte Personen oder Gegenstände festgestellt, so ist der Elektromotor 3 abzuschalten.

Des Weiteren ist der Elektromotor 3 abzuschalten, wenn eine ermittelte Kraft F, die über das an der Motorwelle 4 befestigte Antriebsrad 5 auf das Bauteil 2, d.h. auf die Kabinentür über deren ausgeformte Zahnstange 6 einwirkt, einen vorgegebenen Wert, d.h. die vorgegebene Maximalkraft, überschreitet, da dies bei einem Kontakt mit der Kabinentür oder bei einem Einklemmen durch die Kabinentür zu Verletzungen von Personen oder zur Beschädigung von Gegenständen führen könnte. Die Kraft F ist in der Figur 1 beispielhaft nach links gerichtet dargestellt. Dies trifft für den Fall zu, dass sich das Antriebsrad 5 in Draufsicht von vorn, d.h. in der hier dargestellten Ansicht, im Uhrzeigersinn dreht. Beispielsweise wird dadurch die Kabinentür nach links bewegt, um die Aufzugkabine 1 zu öffnen. Entsprechend ist die Kraft F nach rechts gerichtet, wenn sich das Antriebsrad 5 in entgegengesetzter Richtung dreht, d.h. entgegen dem Uhrzeigersinn. Beispielsweise wird dadurch die Kabinentür nach rechts bewegt, um die Aufzugkabine 1 wieder zu schließen.

Die Kraft F wird in einem Verfahren mittels einer Spannung U und eines Stroms I ermittelt, die im Verbindungsstromkreis 8 ermittelt werden. Zur Ermittlung der Spannung U und des Stroms I im Verbindungsstromkreis 8 weist eine Vorrichtung zur Durchführung des Verfahrens zumindest einen im Verbindungsstromkreis 8 angeordneten ersten Sensor 10 zur Ermittlung der Spannung U und des Stroms I im Verbindungsstromkreis 8 auf. Dieser erste Sensor 10 ist mit einer Auswerteeinheit 11 gekoppelt, um erfasste Sensordaten des ersten Sensors 10 auszuwerten und die Kraft F zu ermitteln.

Die Kraft F kann in einem bewegten Zustand des Bauteils 2 unter Nutzung des Energieerhaltungssatzes in Bezug auf eine Energie im Verbindungsstromkreis 8 und eine mechanisch abgegebene Energie am Elektromotor 3 ermittelt werden. Auf diese Weise wird eine direkte oder indirekte Messung einer Motorspannung oder eines Motorstroms $I_m$ vermieden und durch die wesentlich einfacher und kostengünstiger zu realisierende Ermittlung der Spannung U und des Stroms I im Verbindungsstromkreis 8 ersetzt.

Bei einem bewegten Zustand des Bauteils 2 ist zusätzlich noch eine Ermittlung einer Winkelgeschwindigkeit $\omega$ der Motorwelle 4 oder alternativ eine Ermittlung einer Geschwindigkeit v des Bauteils 2 erforderlich. Zu diesem Zweck weist die Vorrichtung zumindest einen, hier nicht näher dargestellten, mit der Auswerteeinheit 11 gekoppelten zweiten Sensor zur Ermittlung der Geschwindigkeit v des Bauteils 2 und/oder der Winkelgeschwindigkeit $\omega$ der Motorwelle 4 auf. Der zweite Sensor ist beispielsweise ein Inkrementalgeber.

Des Weiteren muss, wenn die Kraft F mittels der Winkelgeschwindigkeit $\omega$ der Motorwelle 4 ermittelt wird, zusätzlich noch ein Radius r des jeweils verwendeten Antriebsrades 5 bekannt sein. Dieser Radius r des Antriebsrades 5 ist beispielsweise einem Datenblatt des Elektromotors 3 oder des Antriebsrades 5 entnehmbar oder messbar.

Für ein mittels des Elektromotors 3 bewegtes Bauteil 2 gilt unter Vernachlässigung von Reibungsverlusten und eines Wirkungsgrades des Elektromotors 3, welcher kleiner als einhundert Prozent ist, dass ein Produkt aus der Spannung U und dem Strom I im Verbindungsstromkreis 8 gleich einem Produkt aus einem Drehmoment M an der Motorwelle 4 und der Winkelgeschwindigkeit $\omega$ der Motorwelle 4 ist:

$$U * I = M * \omega \hspace{6cm} [4]$$

Die linke Seite der Gleichung [4] beschreibt eine elektrische Leistung im Verbindungsstromkreis 8 und die rechte Seite der Gleichung [4] beschreibt eine mechanische Leistung des Elektromotors 3.

Die Spannung U und der Strom I im Verbindungsstromkreis 8 werden mittels des im Verbindungsstromkreis 8 angeordneten ersten Sensors 10 direkt ermittelt. Die Winkelgeschwindigkeit ω wird entweder direkt mittels des beispielsweise als Inkrementalgeber ausgebildeten zweiten Sensors ermittelt, oder mittels des zweiten Sensors wird die Geschwindigkeit v des Bauteils 2 ermittelt, wodurch die Winkelgeschwindigkeit ω auf folgende Weise ermittelt werden kann:

$$\omega = 2 * \pi * \frac{v}{2 * \pi * r} = \frac{v}{r} \qquad [5]$$

Dabei ist π die Kreiszahl.

Das Drehmoment M an der Motorwelle 4 kann durch Umstellung der Gleichung [4] aus der Spannung U und dem Strom I im Verbindungsstromkreis 8 und der Winkelgeschwindigkeit ω der Motorwelle 4 ermittelt werden:

$$M = \frac{U * I}{\omega} \qquad [6]$$

Durch Einsetzen der Gleichung [5] für die Winkelgeschwindigkeit ω der Motorwelle 4 in die Gleichung [6] ergibt sich für das Drehmoment M an der Motorwelle 4:

$$M = U * I * \frac{r}{v} \qquad [7]$$

Die Kraft F entspricht einem Quotienten aus dem Drehmoment M an der Motorwelle 4 und einem wirksamen Hebelarm, wobei eine Länge des Hebelarms dem Radius r des Antriebsrades 5 entspricht:

$$F = \frac{M}{r} \qquad [8]$$

Die Kraft F lässt sich nun unter Verwendung der Geschwindigkeit v des Bauteils 2 durch die oben bereits erwähnte Gleichung [2] ermitteln, welche durch Einsetzen der Gleichung [7] für das Drehmoment M an der Motorwelle 4 in die Gleichung [8] gebildet wird:

$$F = \frac{U * I}{v} \qquad [2]$$

Alternativ lässt sich die Kraft F unter Verwendung der Winkelgeschwindigkeit ω der Motorwelle 4 durch die oben bereits erwähnte Gleichung [3] ermitteln, welche durch Einsetzen der Gleichung [6] für das Drehmoment M an der Motorwelle 4 in die Gleichung [8] gebildet wird:

$$F = \frac{U * I}{\omega * r} \qquad [3]$$

Wie bereits erwähnt, werden bei dieser Ermittlung der Kraft F Reibungsverluste und der Wirkungsgrad des Elektromotors 3 vernachlässigt. Daher ist eine reale Kraft stets geringer als die ermittelte Kraft F, da stets ein Minimum an Reibung vorhanden ist und der Wirkungsgrad des Elektromotors 3 kleiner als einhundert Prozent ist.

Dies ist jedoch insbesondere für dieses Ausführungsbeispiel der Kabinentür sehr vorteilhaft, da auf diese Weise stets ein Sicherheitsspielraum gegeben ist, so dass eine Überschreitung der vorgegebenen zulässigen Maximalkraft verhindert ist. D.h., selbst wenn die ermittelte Kraft F der vorgegebenen Maximalkraft entspricht, die nicht überschritten werden darf, ist in der Realität die reale Kraft, die über das Antriebsrad 5 auf das Bauteil 2, hier auf die Kabinentür einwirkt und welche von einer Vorderkante der Kabinentür eventuell auf Personen oder Gegenstände einwirken würde, geringer als die vorgegebene Maximalkraft, so dass keine Verletzung von Personen oder Beschädigung von Gegenständen zu befürchten ist.

Vergleichbare Zusammenhänge sind auch für einen unbewegten Zustand des Bauteils 2 anwendbar. Da in diesem Fall die Winkelgeschwindigkeit $\omega$ gleich Null ist, wird hierbei der Energieerhaltungssatz mit einem Widerstand R des Elektromotors 3, auch Wicklungswiderstand oder Innenwiderstand genannt, und mit dem Motorstrom $I_m$ des Elektromotors 3 angewendet, wobei der Motorstrom $I_m$, wie im Folgenden gezeigt wird, durch den Strom I und die Spannung U im Verbindungsstromkreis 8 und den Widerstand R des Elektromotors 3 ersetzt werden kann, so dass der Motorstrom $I_m$ selbst nicht gemessen werden muss.

D.h. die Kraft F wird im unbewegten Zustand des Bauteils 2 unter Nutzung des Energieerhaltungssatzes in Bezug auf die Energie im Verbindungsstromkreis 8 und thermische Verluste im stehenden Elektromotor 3 ermittelt. Auf diese Weise wird auch im unbewegten Zustand des Bauteils 2 die direkte oder indirekte Messung der Motorspannung oder des Motorstroms $I_m$ vermieden und durch die wesentlich einfacher und kostengünstiger zu realisierende Ermittlung der Spannung U und des Stroms I im Verbindungsstromkreis 8 ersetzt.

Das Produkt aus der Spannung U und dem Strom I im Verbindungsstromkreis 8 ist gleich einem Produkt aus dem Widerstand R des Elektromotors 3 und dem Quadrat des Motorstroms $I_m$:

$$U * I = R * I_m^2 \tag{9}$$

Die linke Seite der Gleichung [9] beschreibt die elektrische Leistung im Verbindungsstromkreis 8 und die rechte Seite der Gleichung [9] beschreibt die thermischen Verluste im stehenden Elektromotor 3.

Die Spannung U und der Strom I im Verbindungsstromkreis 8 werden auch hier mittels des im Verbindungsstromkreis 8 angeordneten ersten Sensors 10 direkt ermittelt. Der Widerstand R des Elektromotors 3 muss bekannt sein und ist beispielsweise dem Datenblatt des Elektromotors 3 entnehmbar.

Nach Umstellung der Gleichung [9] ergibt sich für den Motorstrom $I_m$:

$$I_m = \sqrt{\frac{U * I}{R}} \tag{10}$$

Die Kraft F kann bei Kenntnis einer Motorkonstante K, welche ebenfalls beispielsweise dem Datenblatt des Elektromotors 3 zu entnehmen ist, über folgende Formel ermittelt werden:

$$F = \frac{K * I_m}{r} \tag{11}$$

Zusätzlich muss auch hier der Radius r des jeweils verwendeten Antriebsrades 5 bekannt sein. Dieser Radius r des Antriebsrades 5 ist, wie bereits erwähnt, beispielsweise dem Datenblatt des Elektromotors 3 oder des Antriebsrades 5 entnehmbar oder messbar.

D.h. die Kraft F lässt sich im unbewegten Zustand des Bauteils 2 durch die oben bereits erwähnte Gleichung [1] ermitteln, welche durch Einsetzen der Gleichung [10] für den Motorstrom Im in die Gleichung [11] gebildet wird:

$$F = \frac{K * \sqrt{\dfrac{U * I}{R}}}{r} \qquad [1]$$

Mittels des Verfahrens kann auf einfache und kostengünstige Weise die Kraft F ermittelt werden, welche durch den Elektromotor 3 bei stehender Kabinentür, beispielsweise bei blockierter Kabinentür, oder bei bewegter Kabinentür auf die Kabinentür übertragen wird und durch diese beispielsweise auf Personen oder Gegenstände einwirkt, wenn eine Vorderkante der Kabinentür auf diese auftreffen sollte und/oder wenn die Personen oder Gegenstände durch die Kabinentür eingeklemmt werden.

Da die Spannung U und der Strom I im Verbindungsstromkreis 8 ermittelt werden, über welchen die Energieversorgungseinheit 9, hier das Netzteil, mit dem Leistungsverstärker 7, insbesondere mit der Endstufe, auch Motorendstufe genannt, gekoppelt ist, d.h. in einem Zwischenstromkreis, ist zur Spannungs- und Stromermittlung kein Eingriff in den Leistungsverstärker 7 oder den Elektromotor 3 oder in die elektrische Kopplung des Leistungsverstärkers 7 mit dem Elektromotor 3 erforderlich. Des Weiteren ist die Ermittlung der Spannung U und des Stroms I mit entsprechenden ersten Sensoren 10 kostengünstig durchführbar, da potenzialbezogen gemessen werden kann. Auf diese Weise können eine Vielzahl unterschiedlicher Leistungsverstärker 7 und Elektromotoren 3 verwendet werden, wobei das Verfahren jeweils problemlos durchgeführt werden kann.

Wie bereits erwähnt, werden bei dieser Ermittlung der Kraft F Reibungsverluste und der Wirkungsgrad des Elektromotors 3 vernachlässigt. Daher ist eine reale Kraft stets geringer als die ermittelte Kraft F, da stets ein Minimum an Reibung vorhanden ist und der Wirkungsgrad des Elektromotors 3 kleiner als einhundert Prozent ist.

Dies ist jedoch insbesondere für dieses Ausführungsbeispiel der Kabinentür, wie oben schon ausgeführt, sehr vorteilhaft, da auf diese Weise stets ein Sicherheitsspielraum gegeben ist, so dass eine Überschreitung der vorgegebenen zulässigen Maximalkraft verhindert ist. D.h., selbst wenn die ermittelte Kraft F der vorgegebenen Maximalkraft entspricht, die nicht überschritten werden darf, ist in der Realität die reale Kraft, die über das Antriebsrad 5 auf das Bauteil 2, hier auf die Kabinentür einwirkt und welche von der Vorderkante der Kabinentür eventuell auf Personen oder Gegenstände einwirken würde, geringer als die vorgegebene Maximalkraft, so dass keine Verletzung von Personen oder Beschädigung von Gegenständen zu befürchten ist.

Zweckmäßigerweise werden die Spannung U und der Strom I im Verbindungsstromkreis 8 und vorteilhafterweise zusätzlich, wenn diese verwendet werden, auch die Geschwindigkeit v des Bauteils 2 und/oder die Winkelgeschwindigkeit ω der Motorwelle 4 als Mittelwerte über einen vorgegebenen Zeitraum ermittelt. Ein derartiger Zeitraum beträgt beispielsweise zehn Millisekunden.

Dies ist sinnvoll aufgrund von Energiespeichern in der durch die Energieversorgungseinheit 9, den Leistungsverstärker 7, den Elektromotor 3 und das mit diesem gekoppelte Bauteil 2 gebildeten Anordnung. Dadurch können kurzzeitige Kraftspitzen verursacht oder ausgeglichen werden, die nicht bei der Energieaufnahme erkennbar sind. Durch die Ermittlung der Spannung U und des Stroms I und vorteilhafterweise zusätzlich, wenn diese verwendet werden, auch der Geschwindigkeit v des Bauteils 2 und/oder der Winkelgeschwindigkeit ω der Motorwelle 4 als Mittelwerte über den vorgegebenen Zeitraum werden Fehlalarme aufgrund falsch ermittelter Kräfte, beispielsweise aufgrund einer kurzzeitigen Kraftspitze, und eine daraus beispielsweise resultierende Fehlabschaltung des Elektromotors 3 vermieden. Derartige Fehlalarme hätten bei einem Aufzug möglicherweise eine lange Ausfallzeit des Aufzugs und einen hohen Wartungsaufwand mit entsprechend hohen Wartungskosten zur Folge.

Der vorgegebene Zeitraum sollte entsprechend der jeweiligen Anwendung ausreichend kurz vorgegeben werden. Bei der Kabinentür sollte der Zeitraum beispielsweise so kurz vorgegeben werden, dass eventuell eingeklemmte Personen nicht verletzt und eingeklemmte Gegenstände nicht beschädigt werden. Bei einem vorgegebenen Zeitraum von beispielsweise zehn Millisekunden ist dies gegeben, da eine so kurze Krafteinwirkung kaum spürbar wäre.

Das Verfahren und die Vorrichtung zur Ermittlung der Kraft F können beispielsweise zum Erkennen einer Fehlfunktion verwendet werden. Dabei wird beispielsweise eine Fehlfunktion erkannt, wenn die ermittelte Kraft F einen vorgegebenen Wert überschreitet. Der Wert wird zweckmäßigerweise durch die Maximalkraft vorgegeben.

Dabei ist es besonders vorteilhaft, wenn die Kraft F in einer vorgegebenen Anzahl von Ermittlungszyklen ermittelt wird und eine Fehlfunktion erkannt wird, wenn in einem vorgegebenen Anteil der Ermittlungszyklen die ermittelte Kraft F den vorgegebenen Wert überschreitet. Auch hier wird der Wert zweckmäßigerweise durch die Maximalkraft vorgegeben.

Beispielsweise wird die Kraft F in drei Ermittlungszyklen ermittelt, so dass drei ermittelte Werte für die Kraft F vorliegen. Es wird dann beispielsweise eine Fehlfunktion erkannt, wenn mindestens zwei der drei ermittelten Werte für die Kraft F den vorgegebenen Wert, beispielsweise die vorgegebene Maximalkraft überschreiten.

Auf diese Weise werden Fehlalarme, d.h. Falscherkennungen einer Fehlfunktion aufgrund kurzzeitiger, im realen Einsatz unbedeutender Kraftüberschreitungen oder beispielsweise aufgrund von Messfehlern und eine daraus beispielsweise resultierende Fehlabschaltung des Elektromotors 3 vermieden. Derartige Fehlalarme hätten bei einem Aufzug möglicherweise eine lange Ausfallzeit des Aufzugs und einen hohen Wartungsaufwand mit entsprechend hohen Wartungskosten zur Folge.

Bei einer erkannten Fehlfunktion wird der Elektromotor 3 zweckmäßigerweise abgeschaltet. Zu diesem Zweck ist vorteilhafterweise die Vorrichtung, beispielsweise die Auswerteeinheit 11 der Vorrichtung mit dem Elektromotor 3 gekoppelt, um diesen bei einer erkannten Fehlfunktion abschalten zu können.

Durch das Abschalten des Elektromotors 3 wird bei einer derartigen erkannten Fehlfunktion das Bauteil 2, beispielsweise die Kabinentür der Aufzugkabine 1, nicht mehr bewegt, wodurch Gefährdungen von Personen oder Gegenständen, welche von dem Bauteil 2, d.h. von der Kabinentür, mit einer unzulässig hohen Kraft getroffen und eingeklemmt und dadurch verletzt bzw. beschädigt werden könnten, vermieden.

Bei einem Aufzug wird daraus resultierend zweckmäßigerweise der gesamte Aufzug außer Betrieb gesetzt, um eine Gefährdung von Personen durch eine Bewegung der Aufzugkabine 1 mit nicht verschlossener Kabinentür und des Weiteren durch nicht verschlossene Aufzugschachttüren, welche üblicherweise durch eine Kopplung mit der Kabinentür bewegt werden, zu vermeiden. Zudem wird bevorzugt eine Fehlermeldung generiert und beispielsweise an einen Wartungsdienst weitergeleitet, so dass eine schnelle Reparatur ermöglicht wird. Des Weiteren können aufgrund einer derartigen Fehlermeldung sich eventuell noch in der Aufzugkabine 1 befindende Personen durch den Wartungsdienst unverzüglich befreit werden.

## Patentansprüche

1. Verfahren zur Ermittlung einer Kraft (F), die über ein Antriebsrad (5), das an einer Motorwelle (4) eines Elektromotors (3) oder Abtriebswelle eines Getriebemotors befestigt ist, auf ein Bauteil (2) einwirkt, welches mit dem Antriebsrad (5) direkt formschlüssig und/oder kraftschlüssig gekoppelt ist, wobei der Elektromotor (3) mit einem Leistungsverstärker (7) elektrisch gekoppelt ist, welcher über einen Verbindungsstromkreis (8) mit einer Energieversorgungseinheit (9) gekoppelt ist, wobei die Kraft (F) mittels einer Spannung (U) und eines Stroms (I) ermittelt wird, die im Verbindungsstromkreis (8) ermittelt werden, wobei die Kraft (F) in einem bewegten Zustand des Bauteils (2) mittels der im Verbindungsstromkreis (8) ermittelten Spannung (U), mittels des im Verbindungsstromkreis (8) ermittelten Stroms (I) sowie entweder mittels einer Winkelgeschwindigkeit ($\omega$) der Motorwelle (4) und mittels eines Radius (r) des Antriebsrades (5) oder mittels eines Mittelwertes einer über einen vorgegebenen Zeitraum ermittelten Geschwindigkeit (v) des Bauteils (2) ermittelt wird.

2. Verfahren nach Anspruch 1,
   **dadurch gekennzeichnet, dass** die Spannung (U) und der Strom (I) im Verbindungsstromkreis (8) als Mittelwerte über einen vorgegebenen Zeitraum ermittelt werden.

3. Verfahren nach Anspruch 1 oder 2,
   **dadurch gekennzeichnet, dass** in einem unbewegten Zustand des Bauteils (2) die Kraft (F) mittels der im Verbindungsstromkreis (8) ermittelten Spannung (U), mittels des im Verbindungsstromkreis (8) ermittelten Stroms (I), mittels einer Motorkonstante (K), mittels eines Widerstandes (R) des Elektromotors (3) und mittels eines Radius (r) des Antriebsrades (5) ermittelt wird.

4. Verfahren nach einem der vorhergehenden Ansprüche, **dadurch gekennzeichnet, dass** im Falle, dass die Kraft (F) in einem bewegten Zustand des Bauteils (2) unter Verwendung der Winkelgeschwindigkeit ($\omega$) der Motorwelle (4) ermittelt wird, die Winkelgeschwindigkeit ($\omega$) der Motorwelle (4) als Mittelwert über einen vorgegebenen Zeitraum ermittelt wird.

5. Vorrichtung zur Durchführung des Verfahrens nach einem der Ansprüche 1 bis 4, zur Ermittlung einer Kraft (F), die über ein Antriebsrad (5), das an einer Motorwelle (4) eines Elektromotors (3) oder Abtriebswelle eines Getriebemotors befestigt ist, auf ein Bauteil (2) einwirkt, welches mit dem Antriebsrad (5) direkt formschlüssig und/oder kraftschlüssig gekoppelt ist, wobei der Elektromotor (3) mit einem Leistungsverstärker (7) elektrisch gekoppelt ist, welcher über einen Verbindungsstromkreis (8) mit einer Energieversorgungseinheit (9) gekoppelt ist, umfassend eine Auswerteeinheit (11) und zumindest einen mit der Auswerteeinheit (11) gekoppelten und im Verbindungsstromkreis (8) angeordneten ersten Sensor (10) zur Ermittlung einer Spannung (U) und eines Stroms (I) im Verbindungsstromkreis (8) und zumindest einen mit der Auswerteeinheit (11) gekoppelten zweiten Sensor zur Ermittlung einer Winkelgeschwindigkeit ($\omega$) der Motorwelle (4).

6. Verwendung eines Verfahrens nach einem der Ansprüche 1 bis 4 und/oder einer Vorrichtung nach Anspruch 5, wobei die Kraft (F) mittels des Verfahrens in einer vorgegebenen Anzahl von Ermittlungszyklen ermittelt wird und eine Fehlfunktion erkannt wird, wenn in einem vorgegebenen Anteil der Ermittlungszyklen die ermittelte Kraft (F) einen vorgegebenen Wert überschreitet.

7. Verwendung nach Anspruch 6,
   **dadurch gekennzeichnet, dass** der Elektromotor (3) bei einer erkannten Fehlfunktion abgeschaltet wird.

**Claims**

1. Method for determining a force (F) which acts by way of a pinion gear (5), which is mounted to a motor shaft (4) of an electric motor (3) or on an output shaft of a geared motor, on a component (2) which is directly coupled in a form-fit and/or force-fit manner to the pinion gear (5), wherein the electric motor (3) is electrically coupled to a power amplifier (7) which is coupled by way of a connecting electrical circuit (8) to an electricity supply unit (9), wherein the force (F) is determined by means of a voltage (U) and a current (I) which are determined in the connecting electrical circuit (8), wherein in a moving state of the component (2) the force (F) is determined by means of the voltage (U) determined in the connecting electrical circuit (8), by means of the current (I) determined in the connecting electrical circuit (8), and either by means of an angular velocity (ω) of the motor shaft (4) and by means of a radius (r) of the pinion gear (5) or by means of an average value of a velocity (v) of the component (2) determined over a predefined time interval.

2. Method according to claim 1,
   **characterised in that** the voltage (U) and the current (I) in the connecting electrical circuit (8) are determined as average values over a predefined time interval.

3. Method according to claim 1 or 2,
   **characterised in that** in an immobile state of the component (2) the force (F) is determined by means of the voltage (U) determined in the connecting electrical circuit (8), by means of the current (I) determined in the connecting electrical circuit (8), by means of a motor constant (K), by means of a resistance (R) of the electric motor (3), and by means of a radius (r) of the pinion gear (5).

4. Method according to one of the preceding claims,
   **characterised in that** if the force (F) is determined in a moving state of the component (2) using the angular velocity (ω) of the motor shaft (4), the angular velocity (ω) of the motor shaft (4) is determined as an average value over a predefined time interval.

5. Apparatus for performing the method according to one of claims 1 to 4, for determining a force (F) which acts by way of a pinion gear (5), which is mounted to a motor shaft (4) of an electric motor (3) or on an output shaft of a geared motor, on a component (2) which is directly coupled in a form-fit and/or force-fit manner to the pinion gear (5), wherein the electric motor (3) is electrically coupled to a power amplifier (7) which is coupled by way of a connecting electrical circuit (8) to an electricity supply unit (9), said apparatus comprising an evaluation unit (11) and at least one first sensor (10) coupled to the evaluation unit (11) and arranged in the connecting electrical circuit (8) for the purpose of determining a voltage (U) and a current (I) in the connecting electrical circuit (8) and at least one second sensor coupled to the evaluation unit (11) for the purpose of determining an angular velocity (ω) of the motor shaft (4).

6. Use of a method according to one of claims 1 to 4 and/or of an apparatus according to claim 5, wherein the force (F) is determined by means of the method in a predefined number of determining cycles and a malfunction is detected if the determined force (F) exceeds a predefined value in a predefined percentage of the determining cycles.

7. Use according to claim 6,
   **characterised in that** the electric motor (3) is switched off if a malfunction is detected.

**Revendications**

1. Procédé de détermination d'une force ( F ), qui, par l'intermédiaire d'une roue ( 5 ) d'entraînement fixée à un arbre ( 4 ) d'un moteur ( 3 ) électrique ou d'un arbre de sortie d'un motoréducteur, s'applique à une pièce ( 2 ) qui est couplée directement à complémentarité de forme et/ou à complémentarité de force à la roue ( 5 ) d'entraînement, le moteur ( 3 ) électrique étant relié électriquement à un amplificateur ( 7 ) de puissance qui est relié à une unité ( 9 ) d'alimentation en énergie par l'intermédiaire d'un circuit ( 8 ) de liaison, la force ( F ) étant déterminée au moyen d'une tension ( U ) et d'un courant ( I ) qui sont déterminés dans le circuit ( 8 ) de liaison, la force ( F ) étant déterminée, lorsque la pièce ( 2 ) est en mouvement, au moyen de la tension ( U ) déterminée dans le circuit ( 8 ) de liaison, au moyen du courant ( I ) déterminé dans le circuit ( 8 ) de liaison, ainsi que soit au moyen d'une vitesse ( $\omega$ ) angulaire de l'arbre ( 4 ) du moteur et au moyen d'un rayon ( r ) de la roue ( 5 ) d'entraînement, soit au moyen d'une valeur moyenne d'une vitesse ( v ) de la pièce ( 2 ) déterminée sur un laps de temps déterminé à l'avance.

2. Procédé suivant la revendication 1,
   **caractérisé en ce que** l'on détermine la tension ( U ) et le courant I ) du circuit ( 8 ) de liaison en tant que valeur moyenne sur un laps de temps donné à l'avance.

3. Procédé suivant la revendication 1 ou 2,
   **caractérisé en ce que**, lorsque la pièce ( 2 ) n'est pas en mouvement, on détermine la force ( F ) au moyen de la tension ( U ) déterminée dans le circuit ( 8 ) de liaison, au moyen du courant ( I ) déterminé dans le circuit ( 8 ) de liaison, au moyen d'une constante ( K ) du moteur, au moyen d'une résistance ( R ) du moteur ( 3 ) électrique et au moyen d'un rayon ( r ) de la roue ( 5 ) d'entraînement.

4. Procédé suivant l'une des revendications précédentes,
   **caractérisé en ce que**, dans le cas où la force ( F ) est déterminée lorsque la pièce ( 2 ) est en mouvement en utilisant la vitesse ( $\omega$ ) angulaire de l'arbre ( 4 ) du moteur, on détermine la vitesse ( $\omega$ ) angulaire de l'arbre ( 4 ) du moteur comme étant une valeur moyenne sur un laps de temps donné à l'avance.

5. Dispositif pour effectuer le procédé suivant l'une des revendications 1 à 4 de détermination d'une force ( F ), qui s'applique à une pièce ( 2 ) qui est couplée directement à complémentarité de forme et/ou à complémentarité de force à la roue ( 5 ) d'entraînement, le moteur ( 3 ) électrique étant relié électriquement à un amplificateur ( 7 ) de puissance lequel est relié à une unité (9) d'alimentation en énergie par un circuit (8) de liaison, comprenant une unité ( 11 ) d'évaluation et au moins un premier capteur ( 10 ) relié à l'unité ( 11 ) d'évaluation, monté dans le circuit ( 8 ) de liaison et servant à déterminer une tension ( U ) et un courant ( I ) dans le circuit ( 8 ) de liaison et au moins un deuxième capteur relié à l'unité ( 11 ) d'évaluation et servant à déterminer une vitesse ( $\omega$ ) angulaire de l'arbre ( 4 ) du rotor.

6. Utilisation d'un procédé suivant l'une des revendications 1 à 4 et/ou d'un dispositif suivant la revendication 5, la force étant déterminée au moyen du procédé dans un nombre donné à l'avance de cycles de détermination et un fonctionnement défectueux étant détecté si, dans une proportion donnée à l'avance des cycles de détermination, la force ( F ) déterminée dépasse une valeur donnée à l'avance.

7. Utilisation suivant la revendication 6,
   **caractérisée en ce qu'**on arrête le moteur ( 3 ) électrique si l'on détecte un fonctionnement défectueux.

FIG 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000128465 A